# EUROPEAN PATENT SPECIFICATION

(11) **EP 2 644 030 B1**
(45) Date of publication and mention of the grant of the patent: **14.05.2014**
(21) Application number: 12161961.3
(22) Date of filing: 29.03.2012
(51) Int. Cl.: A01N 25/34, B32B 3/30

(54) **Non-level multilayer antibacterial sheet**
Mehrschichtige antibakterielle Platte ohne Nivellierung
Feuille antibactérienne multicouche inégale

(43) Date of publication of application: 02.10.2013
(73) Proprietor: Tien, Hsiu-Chuan, Taichung City (TW)
(72) Inventor: Tien, Hsiu-Chuan, Shengang Dist., Taichung City (TW)
(74) Representative: 2K Patentanwälte Blasberg Kewitz & Reichel

(56) References cited:
- DATABASE WPI Week 199619 Thomson Scientific, London, GB; AN 1996-183428 XP002677759, -& JP 8 057994 A (MITSUBISHI ALUMINIUM CO LTD) 5 March 1996 (1996-03-05)

## Description

### FIELD OF THE INVENTION

The present invention relates to a liquid absorption sheet and particularly to a non-level multilayer antibacterial sheet.

### BACKGROUND OF THE INVENTION

In many damp and warm environments, such as Southeast Asia regions, how to prevent foods or leather goods from being moldy is a common goal of a lot of people. At present a commonly adopted technique to meet this end is to place a chemical agent such as antiseptic, desiccant or deoxidizer into a container to curb or prevent growing of mildews. But used on foods the chemical agent could create ill effects to the health of human body. There is still room for improvement.

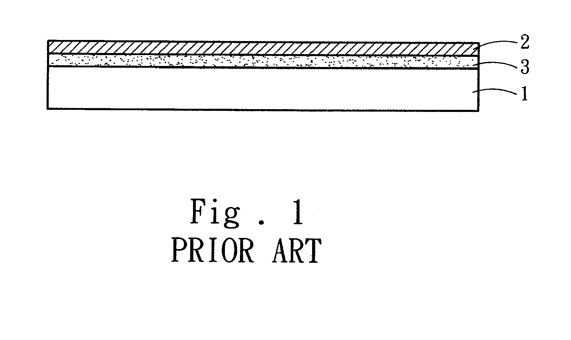

Nowadays there are patches and hanging cards absorbed with anti-mildew essential oil on the market. Please refer to FIG. 1, they generally are formed in a sheet structure including a base sheet 1, an upper sheet 2 and an essential oil absorption layer 3 sandwiched therebetween. The essential oil absorption layer 3 aims to absorb anti-mildew essential oil and has one side exposed to the air to evaporate the essential oil. Whether the essential oil is evaporated through the upper sheet 2 or base sheet 1 depends on the material thereof. However, the essential oil absorption layer 3 cannot hold a large amount of the essential oil; after used for a long period of time, the anti-mildew essential oil is almost evaporated to the end, thus replacement has to be done. Usability is lower. In the event that the anti-mildew essential oil is evaporated through the upper sheet 2 or base sheet 1, use duration is even shorter. There is also room for improvement.

### SUMMARY OF THE INVENTION

The primary object of the present invention is to solve the problems of the conventional technique that has lower storage capacity of anti-mildew essential oil and faster evaporation to result in frequent replacement.

To achieve the foregoing object, the invention provides a non-level multilayer antibacterial sheet that comprises a high-fiber substrate, at least one oil absorption film located on the high-fiber substrate and a non-level oil absorption film located at one side of the oil absorption film remote from the high-fiber substrate. The oil absorption film includes an impermeable polyester layer and a first oil absorption layer to absorb anti-mildew essential oil. The non-level oil absorption film includes a non-level polyester layer and a second oil absorption layer to absorb the anti-mildew essential oil. The non-level polyester layer and second oil absorption layer form a plurality of housing spaces between them to store the anti-mildew essential oil.

Thus, through the oil absorption film and non-level oil absorption film, absorbed and stored capacity of the anti-mildew essential oil can be increased, thereby increase the lifespan of the non-level multilayer antibacterial sheet. Moreover, the housing spaces formed between the non-level polyester layer and second oil absorption layer can store more anti-mildew essential oil and increase evaporation speed thereof, hence can improve dispersion of the anti-mildew essential oil and mildew proof effect.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a cross section of a conventional technique.
FIG. 2A is a schematic cross section of a first embodiment of the invention.
FIG. 2B is a fragmentary enlarged cross section of the first embodiment of the invention.
FIG. 3 is an exploded view of a second embodiment of the invention.
FIG. 4 is an exploded view of a third embodiment of the invention.

### DETAILED DESCRIPTION OF THE PREFERRED EMBODIMENTS

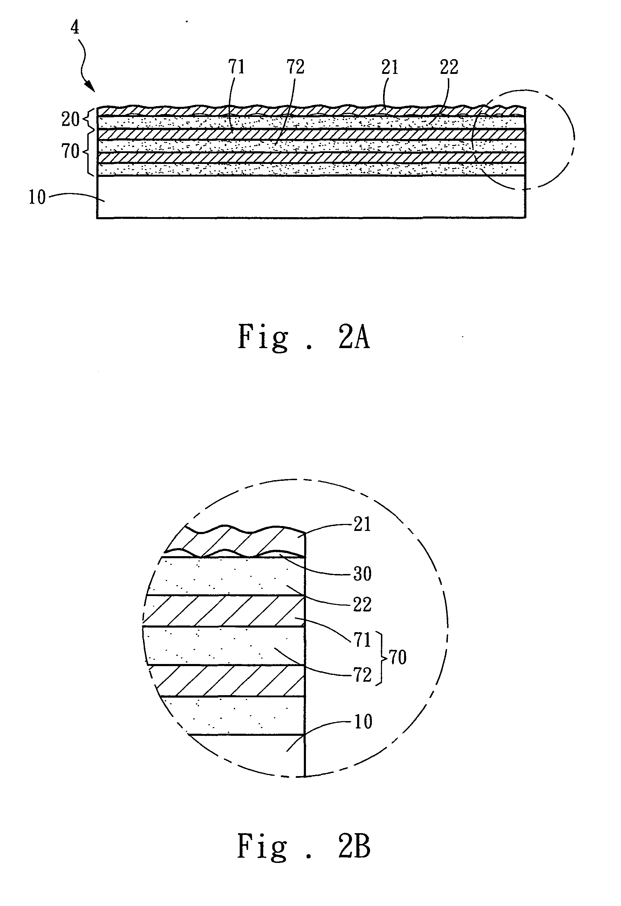

Pease refer to FIGS. 2A and 2B for a first embodiment of the invention. The invention aims to provide a non-level multilayer antibacterial sheet 4 that comprises a high-fiber substrate 10, in particular a substrate having a high content of fibers, at least one oil absorption film 70 located on the high-fiber substrate 10 and a non-level oil absorption film 20 located at one side of the oil absorption film 70 remote from the high-fiber substrate 10. The oil absorption film 70 includes an impermeable polyester layer 71 and a first oil absorption layer 72 to absorb anti-mildew essential oil. In this embodiment, the first oil absorption layer 72 is adjacent to the high-fiber substrate 10, while the impermeable polyester layer 71 is located at one side of the first oil absorption layer 72 remote from the high-fiber substrate 10. The oil absorption film 70 can be formed in multiple sets stacked over each other. The non-level oil absorption film 20 includes a non-level polyester layer 21 and a second oil absorption layer 22 to absorb the anti-mildew essential oil. The non-level polyester layer 21 and second oil absorption layer 22 form a plurality of housing spaces 30 between them to store the anti-mildew essential oil. It is to be noted that the non-level oil absorption film 20 can be made in a corrugated manner through a manufacturing process during bonding various films, or via a special embossing process. The first oil absorption layer 72 and second oil absorption layer 72 can be made of non-plastic adhesive. After the oil absorption layer 70, non-level oil absorption film 20 and high-fiber substrate 10 are bonded together, the anti-mildew essential oil is absorbed by the high-fiber substrate 10, oil absorption film 70 and non-level oil absorption film 20 via a vaporization process. This is a regular essential oil absorption process known in the art, thus details are omitted herein.

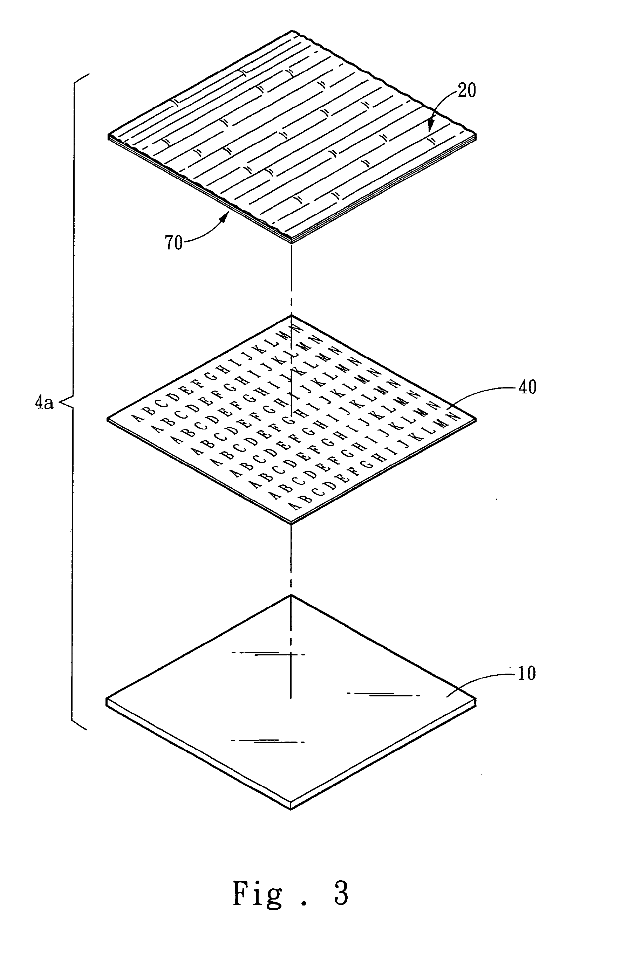

Please refer to FIG. 3 for a second embodiment of the invention. In order to form a desired pattern on the non-level multilayer antibacterial sheet 4a to improve aesthetic appeal and mark use instructions and cautionary messages such as inedible remarks as well, an ink layer 40 may be provided between the high-fiber substrate 10 and oil absorption film 70. In this embodiment, the ink layer 40 is made of coated paper. Through the ink layer 40 the non-level multilayer antibacterial sheet 4a can be formed with text or graphic display function.

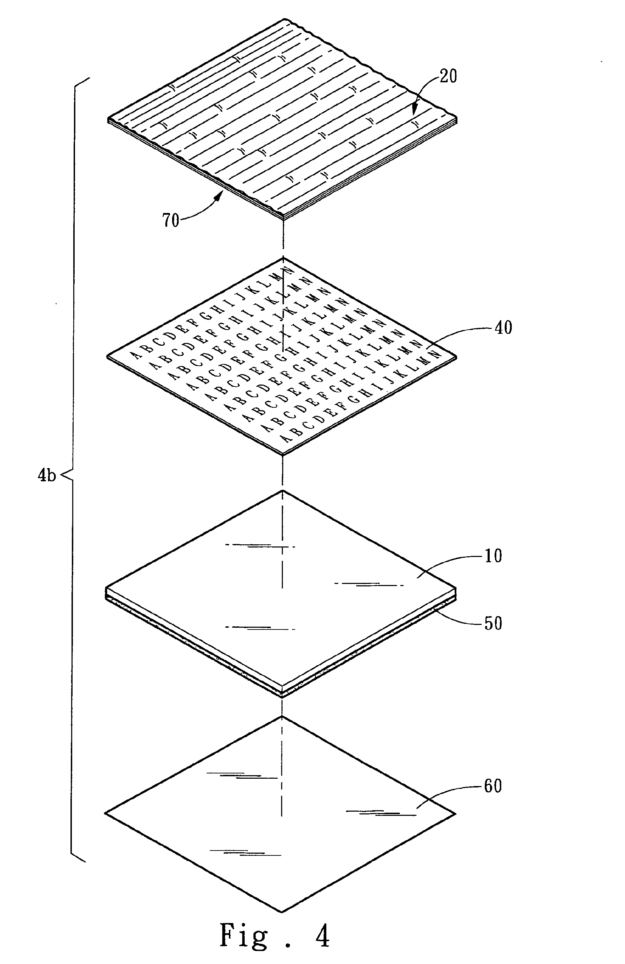

Please refer to FIG. 4 for a third embodiment of the invention. The non-level multilayer antibacterial sheet 4b can also be formed with bonding function. To meet this end, a bonding layer 50 is formed at one side of the high-fiber substrate 10 remote from the oil absorption film 70, and a release paper 60 is provided and bonded to one side of the bonding layer 50 remote from the high-fiber substrate 10.

As a conclusion, compared with the conventional technique, the invention provides features as follow:
1. Through multiple sets of the oil absorption films stacked over one another, more anti-mildew essential oil can be stored, hence evaporation period of the anti-mildew essential oil increases and total lifespan enhances.
2. The housing spaces formed between the non-level polyester layer and second oil absorption layer can increase storing capacity of the anti-mildew essential oil, and also increase contact area with the air, hence can accelerate evaporation of the anti-mildew essential oil and enhance dispersion thereof to improve mildew proof effect. It provides significant improvements over the conventional technique.

While the preferred embodiments of the invention have been set forth for the purpose of disclosure, they are not the limitations of the invention, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A non-level multilayer antibacterial sheet, **characterized by**:
a high-fiber substrate (10);
at least one oil absorption film (70) located on the high-fiber substrate (10) and including an impermeable polyester layer (71) and a first oil absorption layer (72) to absorb anti-mildew essential oil; and
a non-level oil absorption film (20) which is located at one side of the oil absorption film (70) remote from the high-fiber substrate (10) and includes a non-level polyester layer (21), a second oil absorption layer (22) to absorb the anti-mildew essential oil, and a plurality of housing spaces (30) formed between the non-level polyester layer (21) and the second oil absorption layer (22) to store the anti-mildew essential oil.

2. The non-level multilayer antibacterial sheet of claim 1, wherein the first oil absorption layer (72) and the second oil absorption layer (22) are made of non-plastic adhesive.

3. The non-level multilayer antibacterial sheet of claim 1 or 2, wherein the first oil absorption layer (72) is adjacent to the high-fiber substrate (10) and the impermeable polyester layer (71) is located at one side of the first oil absorption layer (72) remote from the high-fiber substrate (10).

4. The non-level multilayer antibacterial sheet of any of the preceding claims, wherein the oil absorption film (70) includes multiple sets stacked over each other.

5. The non-level multilayer antibacterial sheet of any of the preceding claims, further including a bonding layer (50) located at one side of the high-fiber substrate (10) remote from the oil absorption film (70) and a release paper (60) adhering to one side of the bonding layer (50) remote from the high-fiber substrate (10).

6. The non-level multilayer antibacterial sheet of any of the preceding claims, further including an ink layer (40) between the high-fiber substrate (10) and the non-level oil absorption film (20).

7. The non-level multilayer antibacterial sheet of claim 6, wherein the ink layer (40) is made of coated paper.

## Patentansprüche

1. Mehrschichtige antibakterielle Platte, **gekennzeichnet durch**:
ein Substrat mit einem hohen Faseranteil (10)_{;}
mindestens eine Öl-Absorptionsschicht (70), die auf dem Substrat mit einem hohen Faseranteil (10) angeordnet ist und eine undurchlässige Polyesterschicht (71) und eine erste Öl-Absorptionsschicht (72) aufweist, um ein gegen Schimmel wirkendes ätherisches Öl zu absorbieren; und
eine unebene Öl-Absorptionsschicht (20), die auf einer Seite der Öl-Absorptionsschicht (70), die dem Substrat mit einem hohen Faseranteil (10) abgewandt ist, angeordnet ist und eine unebene Polyesterschicht (21), eine zweite Öl-Absorptionsschicht (22) zum Absorbieren des gegen Schimmel wirkenden ätherischen Öls und eine Mehrzahl von Aufnahmeräumen (30) aufweist, die zwischen der unebenen Polyesterschicht (21) und der zweiten Öl-Absorptionsschicht (22) ausgebildet sind, um das gegen Schimmel wirkende ätherische Öl aufzunehmen bzw. zu speichern.

2. Mehrschichtige antibakterielle Platte nach Anspruch 1, wobei die erste Öl-Absorptionsschicht (72) und die zweite Öl-Absorptionsschicht (22) aus einem kunststofffreien Kleber bzw. Haftmittel bestehen.

3. Mehrschichtige antibakterielle Platte nach Anspruch 1 oder 2, wobei die erste Öl-Absorptionsschicht (72) an das Substrat mit einem hohen Faseranteil (10) angrenzt und die undurchlässige Polyesterschicht (71) auf einer Seite der ersten Öl-Absorptionsschicht (72), die dem Substrat mit einem hohen Faseranteil (10) abgewandt ist, angeordnet ist.

4. Mehrschichtige antibakterielle Platte nach einem der vorhergehenden Ansprüche, wobei die Öl-Absorptionsschicht (70) mehrere übereinander gestapelte Lagen bzw. Sätze umfasst.

5. Mehrschichtige antibakterielle Platte nach einem der vorhergehenden Ansprüche, die weiterhin eine Verbindungs- bzw. Klebeschicht (50), die auf einer Seite des Substrats mit einem hohen Faseranteil (10), die der Öl-Absorptionsschicht (70) abgewandt ist, angeordnet ist, und ein Trennpapier (60) aufweist, das an einer Seite der Verbindungs- bzw. Klebeschicht (50), die dem Substrat mit einem hohen Faseranteil (10) abgewandt ist, anhaftet.

6. Mehrschichtige antibakterielle Platte nach einem der vorhergehenden Ansprüche, weiterhin umfassend eine Farbschicht (40) zwischen dem Substrat mit einem hohen Faseranteil (10) und der unebenen Öl-Absorptionsschicht (20).

7. Mehrschichtige antibakterielle Platte nach Anspruch 6, wobei die Farbschicht (40) aus einem unbeschichteten Papier besteht.

## Revendications

1. Une feuille anti-bactérienne multicouche inégale, **caractérisée par** :
un substrat riche en fibres (10) ;
au moins un film d'absorption d'huile (70) situé sur le substrat riche en fibres (10) et comprenant une couche polyester imperméable (71) et une première couche d'absorption d'huile (72) pour l'absorption d'huile essentielle anti-moisissure ; et
un film d'absorption d'huile inégal (20) qui est situé sur un côté du film d'absorption d'huile (70) à distance du substrat riche en fibres (10) et comportant une couche polyester inégale (21), une seconde couche d'absorption d'huile (22) pour l'absorption d'huile essentielle anti-moisissure, et une pluralité d'espaces de logement (30) formés entre la couche polyester inégale (21) et la seconde couche d'absorption d'huile (22) pour le stockage de l'huile essentielle anti-moisissure.

2. La feuille anti-bactérienne multicouche inégale de la revendication 1, dans laquelle la première couche d'absorption d'huile (72) et la seconde couche d'absorption d'huile (22) sont réalisées en adhésif non plastique.

3. La feuille anti-bactérienne multicouche inégale de la revendication 1 ou 2, dans laquelle la première couche d'absorption d'huile (72) est adjacente au substrat riche en fibres (10) et la couche polyester imperméable (71) est située d'un côté de la première couche d'absorption d'huile (72) à distance du substrat riche en fibres (10).

4. La feuille anti-bactérienne multicouche inégale de l'une quelconque des revendications précédentes, dans laquelle le film d'absorption d'huile (70) comporte de multiples empilages stockés les uns sur les autres.

5. La feuille anti-bactérienne multicouche inégale de l'une quelconque des revendications précédentes, comprenant en outre une couche de soudure (50) située sur un côté du substrat riche en fibres (10) à distance du film d'absorption d'huile (70) et une couche de relâchement (60) adhérant à un côté de la couche de soudure (50) à distance du substrat riche en fibre (10).

6. La feuille anti-bactérienne multicouche inégale de l'une quelconque des revendications précédentes, comprenant en outre une couche d'encre (40) entre le substrat riche en fibre (10) et le film d'absorption d'huile inégal (20).

7. La feuille anti-bactérienne multicouche inégale de la revendication 6, dans laquelle la couche d'encre (40) est réalisée en papier recouvert.
